# EUROPEAN PATENT APPLICATION

(11) **EP 2 760 148 A1**
(43) Date of publication of application: **30.07.2014**
(21) Application number: 13183539.9
(22) Date of filing: 09.09.2013
(51) Int. Cl.: H04J 14/08, H04J 3/00, H04N 21/2365, H04N 21/234, H04N 21/434, H04N 21/436, H04N 21/4363, H04N 21/4402, H04L 12/40, H04L 5/22

(54) **Display apparatus and control method of modulating and demodulating a plurality of image signals**

(30) Priority: 29.01.2013 US 201361757818 P; 27.02.2013 KR 20130021535
(71) Applicant: Samsung Electronics Co., Ltd, Gyeonggi-do 443-742 (KR)
(72) Inventor: Lee, Sang-eun, Seoul (KR); Kim, Bong-su, Gyeonggi-do (KR); Kim, Hyun-ho, Seoul (KR); Ha, Byeong-woon, Gyeonggi-do (KR)
(74) Representative: Davies, Robert Ean

(57) **Abstract**

A display apparatus including a signal demodulator for receiving an integrated signal output from a device and to demodulate the integrated signal into a plurality of image signals is provided. The device including a signal receiver configured to receive the plurality of image signals, an image processor configured to process the plurality of image signals, and a display configured to display an image based on at least one of the processed image signals.

## Description

### BACKGROUND

### Field

Apparatuses and methods consistent with the exemplary embodiments relate to a display apparatus and a control method thereof. More particularly, the exemplary embodiments relate to a display apparatus capable of modulating and demodulating a plurality of image signals to transmit via serial high-speed communications, and a control method thereof.

### Description of the Related Art

A display apparatus is a device which is provided with signals from the outside and outputs image and audio signals. Recently, applications of display apparatus are expanding via connection with various external devices, such as a DVD player, a computer, a USB device and an audio system.

Accordingly, a display apparatus is required to have input ports in accordance with standards for the external devices, such as a DVD player, a computer, a USB device and an audio system, for connection.

### SUMMARY

An aspect of one or more exemplary embodiments is to provide a display apparatus capable of modulating and demodulating a plurality of image signals to transmit the signals via serial high-speed communications, and a control method thereof.

The foregoing and/or other aspects may be achieved by providing a display apparatus including: a signal demodulator configured to receive an integrated signal output from a device and configured to demodulate the integrated signal into a plurality of image signals, the device including a signal receiver configured to receive the plurality of image signals and a signal modulator configured to modulate the plurality of image signals; an image processor configured to process the plurality of image signals; and a display configured to display an image based on at least one of the processed image signals.

The display apparatus may be wirelessly connected to the device via a cable in order to receive the integrated signal.

The display apparatus may be connected to the device in order to receive the integrated signal.

The integrated signal may be transmitted via serial high-speed communications.

The signal demodulator may include a SerDes chip.

The display may simultaneously display the plurality of processed image signals.

The foregoing and/or other aspects may be achieved by providing a device connected to a display apparatus including a display, the device including: a signal receiver configured to receive a plurality of image signals; and a signal modulator configured to modulate the plurality of image signals in order to output a single integrated signal, wherein the single integrated signal output by the signal modulator is demodulated into the plurality of image signals by the display apparatus connected to the device.

The device may be connected to the display apparatus via a cable in order to transmit the integrated signal.

The device may be connected to the display apparatus wirelessly to transmit the integrated signal.

The integrated signal may be transmitted via serial high-speed communications.

The demodulation may be carried out by a SerDes chip.

The foregoing and/or other aspects may be achieved by providing a display apparatus including a first device and a second device, wherein the second device includes a signal receiver configured to receive a plurality of image signals and a signal modulator configured to modulate the plurality of image signals in order to output a single integrated signal, and the first device includes a signal demodulator configured to receive the integrated signal output from the signal modulator and to demodulate the integrated signal into the plurality of image signals, an image processor configured to process the plurality of image signals, and a display configured to display an image based on at least one of the processed image signals.

As described above, a display apparatus and a control method thereof according to one or more exemplary embodiments modulate and demodulate a plurality of image signals input from a connected external device and may transmit the signals via serial high-speed communications, thereby simplifying signal lines and being liberated from the constrains related to distance.

An aspect of the exemplary embodiments may provide a display apparatus including: a signal demodulator configured to receive an integrated signal output from a device and configured to demodulate the integrated signal into a plurality of image signals, and an image processor configured to process the plurality of image signals.

The device may include a signal receiver configured to receive the plurality of image signals and a signal modulator configured to modulate the plurality of image signals.

The display apparatus may further include a display configured to display an image based on at least one of the processed image signals.

The display apparatus may be connected to the device via a cable in order to receive the integrated signal.

The display apparatus may be wirelessly connected to the device to receive the integrated signal.

The signal demodulator may comprise a SerDes chip.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram which schematically illustrates a display apparatus, according to an exemplary embodiment.
FIG. 2 schematically illustrates the connection of a first device and a second device of the display apparatus of FIG. 1, via a cable.
FIG. 3 is a block diagram which schematically illustrates a display apparatus, according to another exemplary embodiment.
FIG. 4 schematically illustrates a wireless connection between a first device and a second device of the display apparatus of FIG. 3.
FIG. 5 is a block diagram which schematically illustrates a signal receiver and a signal modulator of a second device, according to an exemplary embodiment.
FIG. 6 schematically illustrates an internal configuration of a display apparatus, according to an exemplary embodiment.
FIG. 7 is a flowchart which schematically illustrates a control method of a display apparatus, according to an exemplary embodiment.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

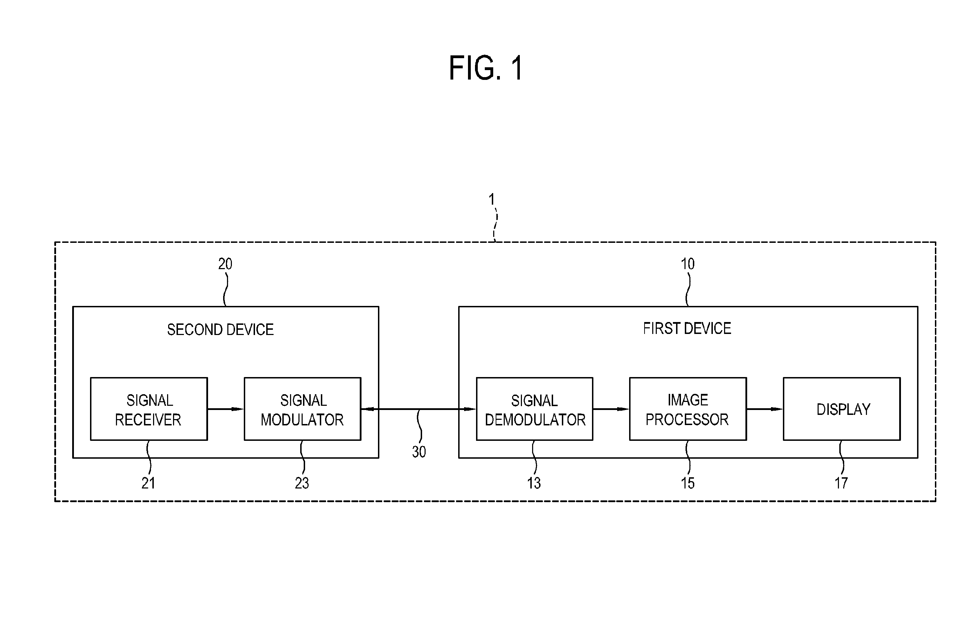

FIG. 1 is a block diagram which schematically illustrates a display apparatus according to an exemplary embodiment.

As shown in FIG. 1, the display apparatus 1 according to an exemplary embodiment includes a first device 10 configured to display an image and a second device 20 configured to input an image signal from external devices (not shown).

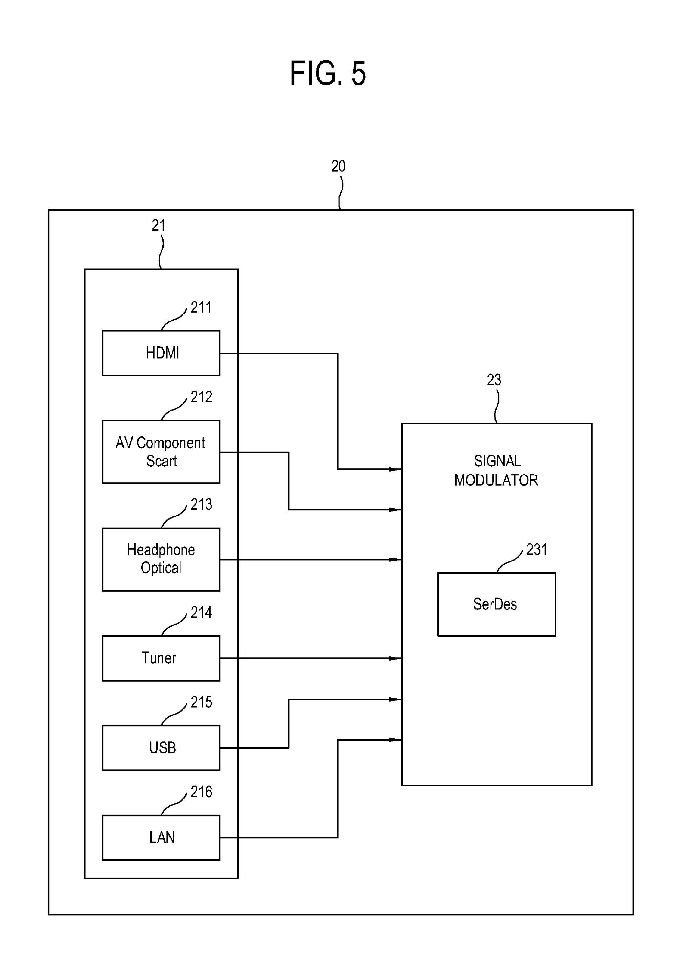

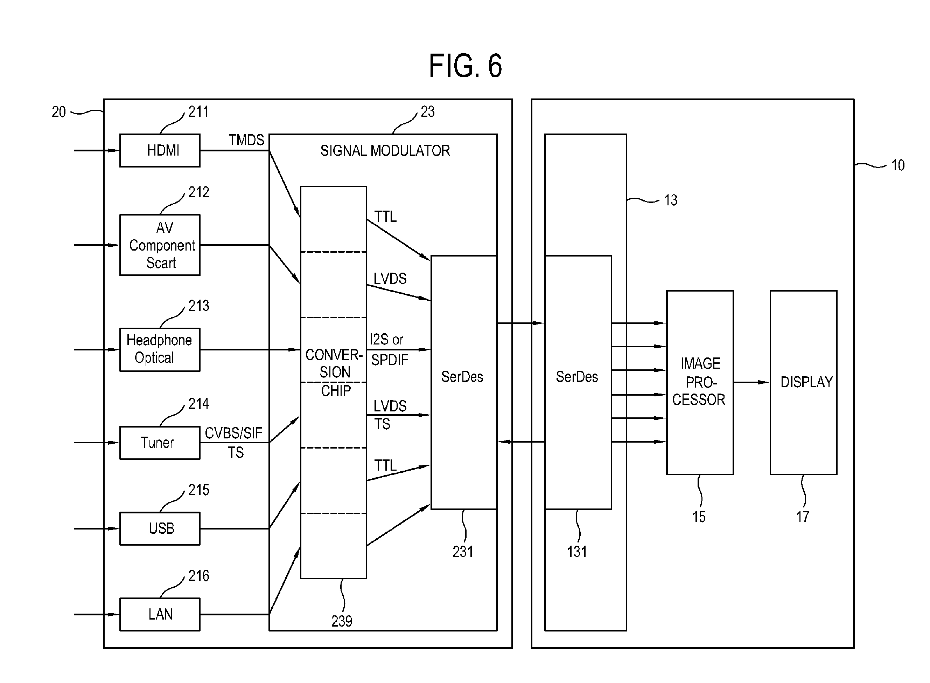

The second device 20 includes a signal receiver 21 configured to receive a plurality of image signals from external devices and a signal modulator 23 configured to modulate the plurality of image signals in order to output a single integrated signal. A configuration of the second device 20 will be described in detail with reference to FIGS. 5 and 6.

The first device 10 includes a signal demodulator 13 configured to receive the integrated signal output from the signal modulation 23 and configured to demodulate the integrated signal into the plurality of image signals, an image processor 15 configured to process the plurality of image signals, and a display 17 configured to display an image based on at least one of the processed image signals.

In addition, the first device 10 may further include an audio signal processor (not shown) configured to process an audio signal and a speaker (not shown to output the audio signal.

The display 17 includes diverse display panels, for example, a cathode-ray tube (CRT), a liquid crystal display (LCD), and a plasma display panel (PDP).

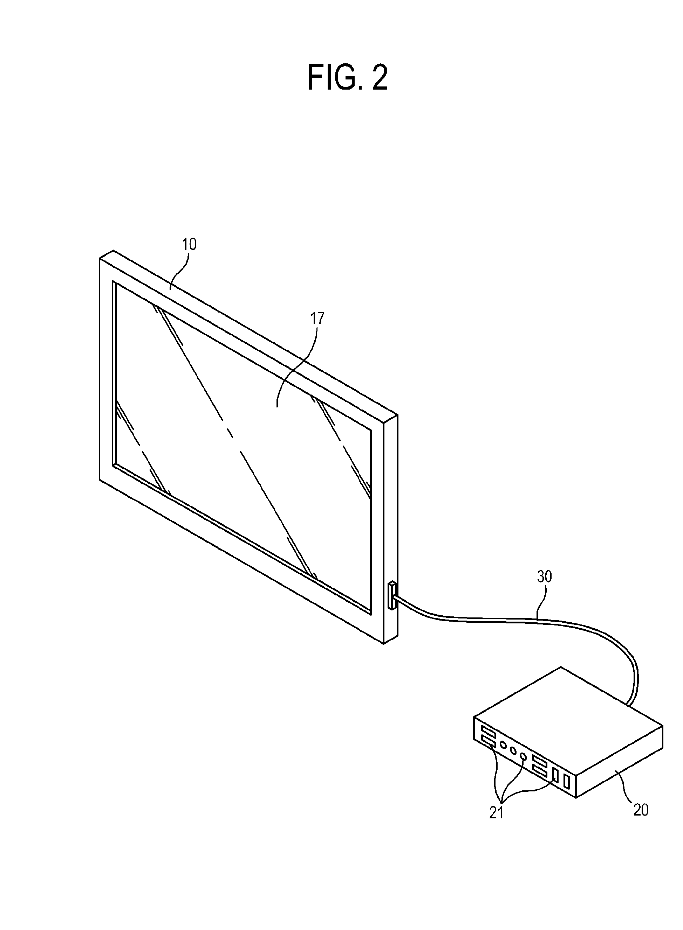

FIG. 2 schematically illustrates a connection of the first device 10 and the second device 20 of the display apparatus 1 of FIG. 1, via a cable 30.

As shown in FIG. 2, the first device 10 including the signal demodulator 13, the image processor 15, and display 17, and the second device 20 including the signal receiver 21 and the signal modulation unit 23 may be separable from each other and be connected via the cable 30 for transmission of the integrated signal.

The cable 30 is for transmitting the single integrated signal, not for the plurality of image signals, and one cable 30 is provided, regardless of a number of connected external devices. Since the first device 10 and the second device 20 are connected via the single cable 30, a problem in the Related Art that intricate signal lines proportionately involved with respect to the number of connected external devices, may be resolved, thereby allowing the display apparatus 1 to have a neat appearance. Further, since the second device 20 connected with the external devices is separated from the first device 10, the display apparatus 1 does not face constraints related to distance between the first device 10 and the external devices.

A different configuration may be used to connect the first device 10 and the second device 20, without being limited to the cable 30. For example, the first device 10 and the second device 20 may be connected to each other wirelessly 30' without the use of cable 30.

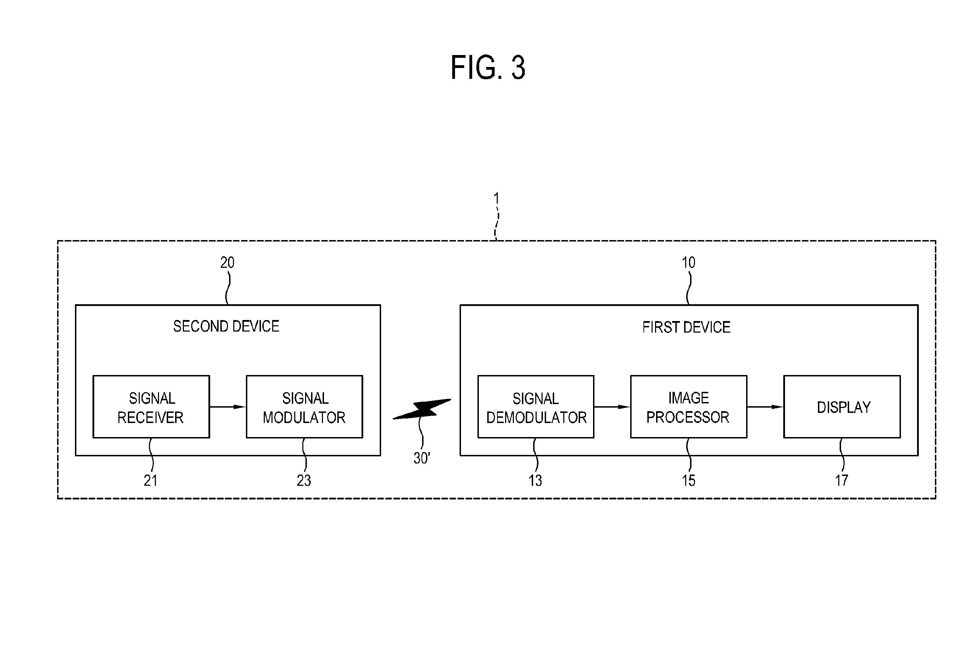

FIG. 3 is a block diagram which schematically illustrates a display apparatus 1 according to another exemplary embodiment. The display apparatus 1 of FIG. 3 is the same as that of FIG. 1 with the exception that the first device 10 and the second device 20 are wirelessly connected 30,' without the cable 30.

As shown in FIG. 3, the first device 10, including a signal demodulator 13, an image processor 15 and a display 17, and the second device 20, including a signal receiver 21 and a signal modulator 23, may be separable from each other and may conduct wireless communications 30' to transmit an integrated signal.

In response to the first device 10 and the second device 20 being connected by a wireless method 30,' the first device 10 and the second device 20 may each include a transmission/reception module for wireless connection. The transmission/reception module may be configured as an external antenna disposed outside or an internal antenna disposed inside. For example, the transmission/reception module may be manufactured based on Bluetooth®.

The external devices may include any apparatus that is connected to the display apparatus 1 to input a signal to the display apparatus 1, such as a DVD player, a BL player, a computer, a USB device, an HDMI device, a set-top box and an audio system.

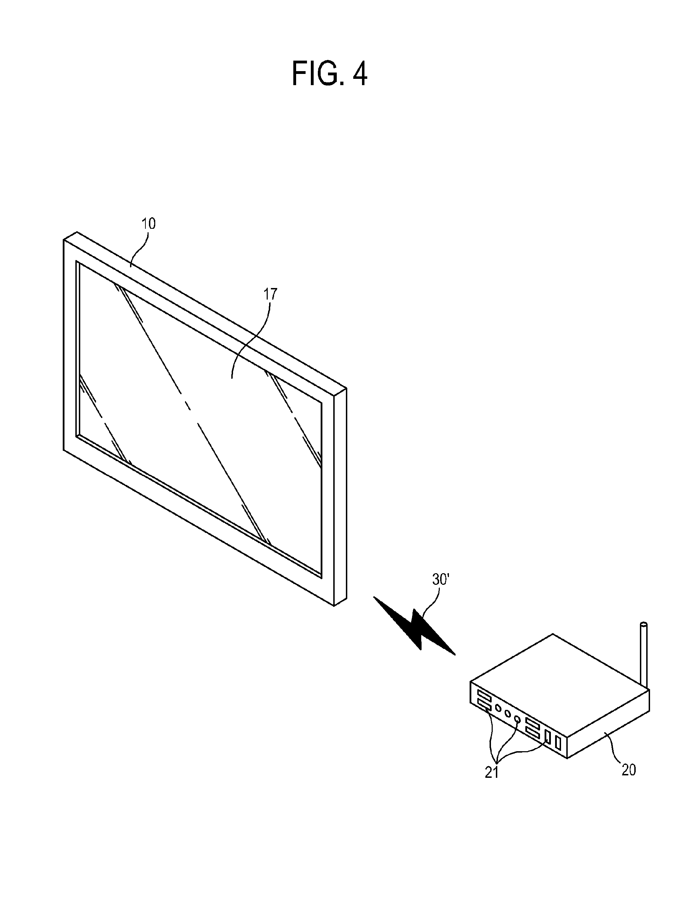

FIG. 4 schematically illustrates that the first device and the second device of the display apparatus of FIG. 3 are connected wirelessly 30.'

FIG. 4 illustrates first device 10, display 17, second signal receiver 21 of second device 20 and wireless connection 30.'

Accordingly, the signal receiver 21 of the second device may be configured to receive a signal from the external devices and may include various input interfaces (see FIG. 5).

FIG. 5 is a block diagram which schematically illustrates the signal receiver 21 and the signal modulator 23 of the second device 20, according to an exemplary embodiment.

Referring to FIG. 5, the signal receiver 21 of the second device 20 includes an interface for High Definition Multimedia Interface (HDMI) input 211, an interface for Audio/Video (AV), COMPONENT or Syndicat des Constructeurs d'Apparaeils Radiorecepteurs et Televiseurs (SCART) input 212, an interface for headphone or optical input 213, an interface for tuner input 214, an interface for Universal Serial Bus (USB) input 215 and an interface for Local Area Network (LAN) input 216.

Further, the signal modulator 23 of the second device 20 may further include a SerDes chip 231. The SerDes chip 231 is used to integrate a plurality of input signals into one signal for serial high-speed communications.

As described above, according to the exemplary embodiments, a plurality of input signals from the external devices are converted into one integrated signal, thereby conducting serial high-speed communications.

Serial high-speed communications enable simultaneous transmission of a plurality of input signals from the second device 20 to the first device 10.

That is, the first device 10 that receives one integrated signal from a plurality of input signals from the external devices through the second device 20 is able to simultaneously process and display a plurality of images.

Hereinafter, signal conversion carried out in the second device 20 will be described in detail with reference to FIG. 6.

FIG. 6 schematically illustrates an internal configuration of the display apparatus according to an exemplary embodiment.

In the case of the interface for HDMI input 211, a Transition Minimized Display Signaling (TMDS) signal is input and converted by a conversion chip 239 (HDMI RX chip) into a Transistor to Transistor Logic (TTL) signal.

In the case of the interface for AV, COMPONENT or SCART input 212, an input signal (CVBS/SIF) is converted by the conversion chip 239 (decoder chip) into a Low voltage differential signaling (LVDS) signal.

In the case of the interface for headphone or optical input 213, an input signal is converted by the conversion chip 239 (decoder chip)into an 12S or Sony Philips Digital Interface (SPDIF) signal.

In the case of the interface for tuner input 214, a Composite Video Banking Sync (CVBS)/Source Intermediate Format (SIF) signal is converted by the conversion chip 239 (decoder chip) and a Transport Stream (TS) signal is transmitted without conversion.

In the case of the interface for USB input 215, an input signal is converted by the conversion chip 239 into a TTL signal.

The interface for Local Area Network (LAN) input 216 may use the conversion chip 239 for conversion.

As such, the second device 20 performs conversion of an analog input signal into a digital signal for serial high-speed communications, and a plurality of converted digital signals are modulated into a single integrated signal through the SerDes chip 231.

Subsequently, the signal demodulator 13 of the first device 10 receives the integrated signal output from the signal modulation unit 23 and demodulates the integrated signal into the plurality of image signals.

Then, the image processor 15 processes the demodulated image signals and the display 17 displays an image based on at least one of the processed image signals. Here, the display 17 may display the plurality of image signals at the same time.

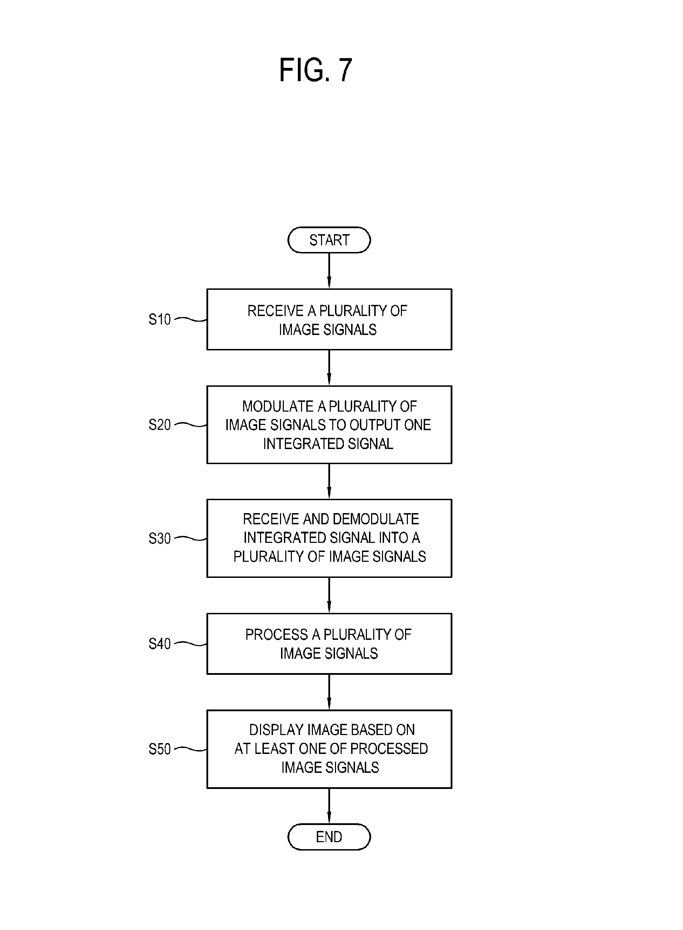

A method of controlling the display apparatus 1 according to an exemplary embodiment will be described with reference to FIG. 7.

FIG. 7 is a flowchart which schematically illustrates the method of controlling the display apparatus 1 according to an exemplary embodiment.

First, the display apparatus 1 receives a plurality of image signals through the signal receiver 21 from external devices (not shown) connected to the second device 20 (S10).

The plurality of image signals received through the signal receiver 21 are modulated by the signal modulator 23 of the second device 20 and output as an integrated signal (S20).

The signal demodulator 13 of the first device 10 connected to the second device 20 via the cable 30 or wirelessly 30' receives the integrated signal output from the signal modulator 23 and demodulates the integrated signal into the plurality of image signals (S30).

The demodulated image signals are processed by the image processor 15 of the first device 10 (S40), and an image based on at least one of the processed image signals is displayed on the display 17 (S50).

As described above, the display apparatus and the control method thereof according to the exemplary embodiments modulate and demodulate a plurality of image signals input from a connected external device to transmit the signals via high-speed communications, thereby simplifying signal lines with the signal transmission being liberated from the constraints of distance.

Although a few exemplary embodiments have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a signal demodulator configured to receive an integrated signal output from a device and configured to demodulate the integrated signal into a plurality of image signals, the device comprising a signal receiver configured to receive the plurality of image signals and a signal modulator configured to modulate the plurality of image signals;
an image processor configured to process the plurality of image signals; and
a display configured to display an image based on at least one of the processed image signals.

2. The display apparatus of claim 1, wherein the display apparatus is connected to the device via a cable in order to receive the integrated signal.

3. The display apparatus of claim 1, wherein the display apparatus is wirelessly connected to the device to receive the integrated signal.

4. The display apparatus of claim 2, wherein the integrated signal is transmitted via serial high-speed communications.

5. The display apparatus of claim 1, wherein the signal demodulator comprises a SerDes chip.

6. The display apparatus of claim 1, wherein the display is configured to simultaneously display the plurality of processed image signals.

7. A device connected to a display apparatus comprising a display, the device comprising:
a signal receiver configured to receive a plurality of image signals; and
a signal modulator configured to modulate the plurality of image signals to output a single integrated signal,
wherein the single integrated signal output by the signal modulator is demodulated into the plurality of image signals by the display apparatus connected to the device.

8. The device of claim 7, wherein the device is connected to the display apparatus via a cable in order to transmit the integrated signal.

9. The device of claim 7, wherein the device is connected wirelessly to the display apparatus in order to transmit the integrated signal.

10. The device of claim 8, wherein the integrated signal is transmitted via serial high-speed communications.

11. The device of claim 7, wherein the demodulation is carried out by a SerDes chip.

12. A display apparatus comprising a first device and a second device,
the second device comprising a signal receiver configured to receive a plurality of image signals and a signal modulator configured to modulate the plurality of image signals to output a single integrated signal, and
the first device comprising a signal demodulator configured to receive the integrated signal output from the signal modulator and to demodulate the integrated signal into the plurality of image signals, an image processor configured to process the plurality of image signals, and a display configured to display an image based on at least one of the processed image signals.

13. The display apparatus of claim 3, wherein the integrated signal is transmitted via serial high-speed communications.

14. The device of claim 9, wherein the integrated signal is transmitted via serial high-speed communications.
